# EUROPÄISCHE PATENTSCHRIFT

(11) **EP 2 223 780 B1**
(45) Veröffentlichungstag und Bekanntmachung des Hinweises auf die Patenterteilung: **04.09.2013**
(21) Anmeldenummer: 10001085.9
(22) Anmeldetag: 03.02.2010
(51) Int. Cl.: B25F 5/02, A01G 3/053, B23D 51/00, H01M 2/10

(54) **Elektroarbeitsgerät mit einem Akkupack**
Electric work device with a battery pack
Appareil de travail électrique doté d'une batterie

(30) Priorität: 27.02.2009 DE 102009012175
(43) Veröffentlichungstag der Anmeldung: 01.09.2010
(73) Patentinhaber: Andreas Stihl AG & Co. KG, 71336 Waiblingen (DE)
(72) Erfinder: Roßkamp, Heiko, Dr., 73099 Adelberg (DE); Mang, Harald, 71364 Winnenden (DE); Müller, Matthias, 73614 Schorndorf-Haubersbronn (DE); Reber, Volker, 74544 Michelbach (DE); Heinzelmann, Georg, 71522 Backnang (DE)
(74) Vertreter: Wasmuth, Rolf

(56) Entgegenhaltungen:
- EP-A2- 1 075 906
- EP-A2- 1 844 646
- DE-A1- 3 839 840
- DE-A1-102007 017 980
- US-A- 4 050 003
- US-A- 4 555 849
- US-A1- 2004 098 869

## Beschreibung

Die Erfindung betrifft ein Elektroarbeitsgerät, insbesondere ein tragbares, handgeführtes Arbeitsgerät wie eine Heckenschere, eine Motorsäge oder dgl. nach dem Oberbegriff des Anspruchs 1.

Derartige Elektrogeräte sind bekannt. Zur Aufnahme eines Akkupacks ist im Gehäuse des Elektrogerätes ein Akkuschacht ausgebildet. Ein derartiger Akkupack weist meist quaderförmige Gestalt auf und wird teilweise im Akkuschacht aufgenommen, so dass das Gehäuse des Arbeitsgerätes durch den angesetzten oder teilweise eingesetzten Akkupack unförmig ist und daher die Benutzung des Arbeitsgerätes erschwert ist.

Aus der DE 10 2007 017 980 A1 ist eine Elektroarbeitsgerät mit einem Gehäuse bekannt, das einen sich in Richtung einer Gehäuselängsachse erstreckenden hinteren Handgriff aufweist. Das Gerätegehäuse weist einen Gehäuseboden und erste sowie zweite Gehäuseseitenflächen auf. In dem Grätegehäuse sind ein elektrischer Antriebsmotor sowie eine Steuerelektronik zur Inbetriebnahme des Antriebsmotors aufgenommen. Im Gerätegehäuse ist ferner ein Akkuschacht zur Aufnahme eines Akkupacks vorgesehen, wobei der Akkupack etwa quaderförmige Gestalt hat und das Akkupackgehäuse sich in allen drei orthogonalen Raumrichtungen in Richtung einer Hochachse, einer Breitenachse und einer Tiefenachse erstreckt. Der Akkupack ist derart in dem Akkuschacht aufgenommen, dass sich seine Breitenachse quer zu der Gehäuselängsachse des Arbeitsgerätes erstreckt. Die Hochachse des Akkupacks steht auf dem Gehäuseboden, wobei die Stirnseiten des Akkupacks benachbart zu zweiten Gehäuseseitenflächen liegen.

Der Erfindung liegt die Aufgabe zugrunde, ein Elektroarbeitsgerät derart weiterzubilden, dass ein zum Betrieb des Gerätes eingesetzter Akkupack und die Abmessungen des Arbeitsgerätes so aufeinander abgestimmt werden, dass **eine gute** Handhabbarkeit des Elektrogerätes **erzielt** ist.

Die Erfindung wird nach den kennzeichnenden Merkmalen des Anspruchs 1 gelöst.

**Der** Akkupack **liegt** mit der Breitenachse quer zu der Gehäuselängsachse, **wodurch sich** die geringste Raumausdehnung des Akkupacks in Richtung der Gehäuselängsachse erstreckt. So kann die Baulänge eines Elektroarbeitsgerätes kurz gehalten werden und erleichtert damit dessen Führung.

**B**ei Motorkettensägen wird durch die Anordnung des Akkupacks eine kurze Bauform erreicht, so dass aufgrund des nur kurzen Hebelarms die vom Benutzer aufgebrachte Vorschubkraft nicht zu groß werden kann, wodurch die Gefahr eines Blockierens des Schneidwerkzeugs im Schnitt verringert ist.

Da die Hochachse auf dem Boden des Gerätes steht, wird im Wesentlichen die gesamte Bauhöhe eines Arbeitsgerätes genutzt, um einen Akkupack aufzunehmen.

**Nach der Erfindung hat der Akkupack eine Höhe, die größer als seine Breite ist, wobei insbesondere die Breite größer als die Tiefe des Akkupacks ist.**

In besonderer Ausbildung der Erfindung sind die langen Schmalseiten des Akkupacks unmittelbar den Gehäuselängsseiten benachbart und die Stirnseiten des Akkupacks benachbart zum Gehäuseboden und der Gehäuseoberseite vorgesehen.

Zweckmäßige Größen **für den Akkupack im Gerätegehäuse** ergeben sich, wenn die Höhe des Akkupacks etwa seiner 1,2fachen bis 2,5fachen Breite entspricht und die Breite des Akkupacks etwa seiner 1,2fachen bis 2,5fachen Tiefe.

Die Anordnung des Akkupacks im Gehäuse des Arbeitsgerätes ist so vorgesehen, dass die Hochachse des Akkupacks die Gehäuselängsachse des Arbeitsgerätes in Draufsicht schneidet. Dabei können die Hochachse des Akkupacks und die Drehachse des Antriebsmotors zweckmäßig eine gemeinsame Ebene bilden, in der vorzugsweise auch die Gehäuselängsachse liegt. Durch diese konstruktive Lage wird eine gute Gewichtsverteilung bei maximaler Raumausnutzung für einen Akkupack möglich.

Vorzugsweise bildet eine Stirnseite des Akkupacks eine Teilfläche einer Gehäuseseite, wobei eben diese Stirnseite des Akkupacks Anzeige- und/oder Betätigungsmittel aufweis**en kann**, über die der Benutzer Informationen ablesen bzw. Informationen abrufen kann.

Es hat sich als zweckmäßig erwiesen, wenn die Hochachse des Akkupacks in Richtung der Gehäuselängsachse mit einem Winkel nach vorne oder nach hinten geneigt liegt. Ein derartiger Winkel kann etwa 2° bis 20° betragen.

Um ein einfaches Einschieben des Akkupacks zu gewährleisten ist vorgesehen, dass die dem hinteren Handgriff abgewandte Breitseite des Akkupacks eine Ebene bestimmt, die mit einem Abstand zu einem vorderen Handgriff liegt.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: in perspektivischer Darstellung einen Akkupack,
- Fig. 2: in schematischer Darstellung den in einen Gehäuseschacht eingesetzten Akkupack nach Fig. 1,
- Fig. 3: eine Draufsicht auf ein als Heckenschere ausgebildetes Elektroarbeitsgerät,
- Fig. 4: eine schematische Seitenansicht der Heckenschere nach Fig. 3,
- Fig. 5: in schematischer Darstellung eine Draufsicht auf ein Elektroarbeitsgerät in Form einer Motorkettensäge,
- Fig. 6: eine schematische Seitenansicht der Motorkettensäge nach Fig. 5,
- Fig. 7: eine Draufsicht auf ein Elektroarbeitsgerät entsprechend Fig. 5,
- Fig. 8: eine schematische Seitenansicht der Motorsäge nach Fig. 7.

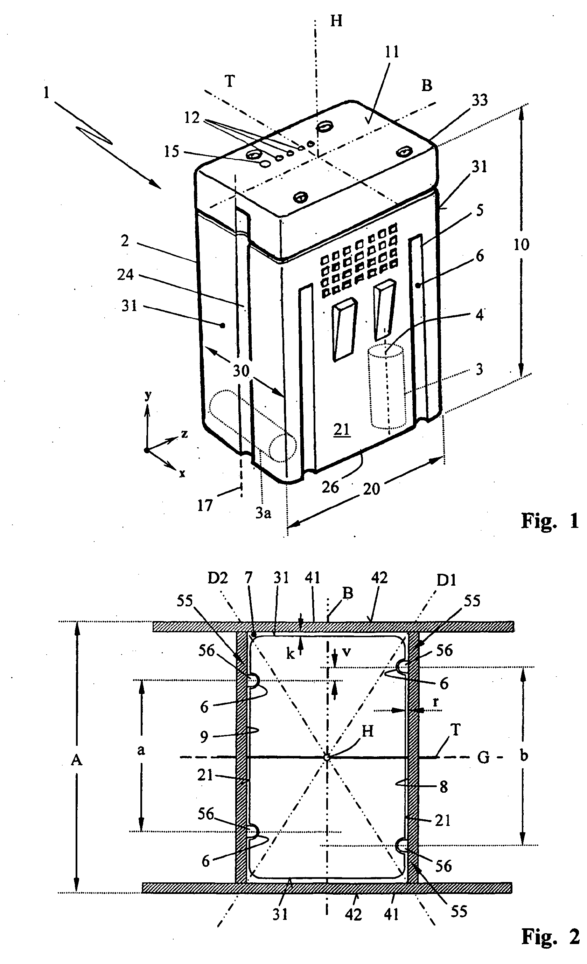

Der in Fig. 1 gezeigte Akkupack 1 besteht aus einem topfförmigen Gehäuse 2, welches durch einen Deckel 33 verschlossen ist. Der Akkupack 1 dient als Energiequelle für ein Elektrowerkzeug, insbesondere für ein handgeführtes Arbeitsgerät wie eine Motorkettensäge, eine Heckenschere, einen Trennschleifer, einen Freischneider, einen Kantenscheider, einen Hochentaster, ein Blasgerät, ein Sprühgerät, ein Sauggerät, ein Erdbohrgerät, ein Kombimotorgerät für multifunktionelle Vorsätze, ein Kehrgerät, eine Motorhacke, eine Bodenfräse, einen Hochdruckreiniger, einen Rasenmäher, einen Vertikutierer, einen Häcksler, einen Nass- oder Trockensauger oder dgl. Arbeitsgerät, welches vorzugsweise tragbar ist. Der dargestellte Akkupack 1 hat eine etwa quaderförmige Grundform, die sich in die orthogonalen Raumrichtungen x, y und z erstreckt. Somit weist der Akkupack eine Hochachse H, eine Breitenachse B und eine Tiefenachse T auf. Dabei ist die Höhe 10 in Richtung der Höhenachse H derart ausgeführt, dass sie größer als die Breite 20 in Richtung der Breitenachse B ist. Bevorzugt entspricht die Höhe 10 des Akkupacks 1 etwa seiner 1,2fachen bis 2,5fachen Breite 20, vorzugsweise etwa seiner 1,4fachen Breite. Zweckmäßig hat der Akkupack 1 eine Höhe 10 von ca. 160 mm und eine Breite 20 von etwa 115 mm.

Der Akkupack hat ferner eine Breite 20, die etwa seiner 1,2fachen bis 2,5fachen Tiefe 30 in Richtung der Tiefenachse T entspricht. Vorzugsweise ist die Breite 20 des Akkupacks 1 so ausgelegt, dass sie etwa der 1,7fachen Tiefe 30 entspricht. Im Ausführungsbeispiel hat der Akkupack eine Tiefe 30 von ca. 67 mm.

Im Gehäuse 2 des Akkupacks 1 sind eine Vielzahl von Zellen 3 angeordnet, wobei in einem Ausführungsbeispiel die Zylinderachse 4 der bevorzugt zylindrisch ausgebildeten Zellen 3 in Richtung der Hochachse H ausgerichtet liegen. Die Zylinderachsen 4 der Zellen 3 liegen parallel zur Hochachse H. In einer alternativen Ausführungsform können die Zellen 3a liegend angeordnet sein, so dass ihre Längsachse etwa parallel zum Boden 26 des Akkupackgehäuses 1 liegt. Die gezeigte zylindrische Form der Akkuzellen ist nur beispielhaft; andere Querschnittsformen wie Quader oder dgl. oder eine Ausbildung als Flachzellen können vorteilhaft sein.

Im Gehäuse 2 des Akkupacks 1 sind bevorzugt in einer ersten Lage eine Vielzahl von Zellen 3 nebeneinander stehend angeordnet; in einer zweiten Lage, die in Hochachse H der ersten Lage folgt, sind eine weitere Vielzahl von Akkuzellen 3 vorgesehen. Die Akkuzellen sind wieder aufladbare Zellen, z. B. Akkuzellen wie eine NiCd-Zelle (Nickel-Cadmium-Zelle), eine NiMh-Zelle(Nickel-Metallhydrid-Zelle), eine LiIo-Zelle (Lithium-Ionen-Zelle), eine LiPo-Zelle (Lithium-Polymer-Zelle), eine LiFePo4-Zelle (Lithium-Eisen-Phosphat-Zelle), eine Lithium-Titanat-Zelle oder dgl. aufgebaute Zellen. Insbesondere Akkuzellen auf Lithiumbasis mit einer Zellspannung von 2 Volt bis 5 Volt, vorzugsweise etwa 3,6 Volt bis 3,7 Volt sind zweckmäßig.

Mit den verwendeten Zellen können durch entsprechende elektrische Zusammenschaltung (Reihenschaltung, Parallelschaltung) Akkupackspannungen von vorzugsweise 25 Volt bis 50 Volt, z. B. 36 Volt oder 42 Volt bereitgestellt werden. Je nach der ausgeführten Schaltung sind Akkupackspannungen von 12 Volt bis 150 Volt möglich. Die Leistung eines derartigen Akkupacks 1 liegt bevorzugt im Bereich zwischen 2 Ah und 10 Ah.

Der in Fig. 1 dargestellte Akkupack weist zwei Breitseiten 21 auf, die sich parallel der durch die Hochachse H und die Breitenachse B aufgespannten Ebene, also in Richtung der y-z-Ebene erstrecken. Die langen Schmalseiten 31 des Akkupacks 1 erstrecken sich parallel zu der von der Hochachse H und der Tiefenachse T aufgespannten Ebene, somit in y-x-Ebene.

Die Stirnseiten 11 des Akkupacks erstrecken sich parallel zu der durch die Breitenachse B und die Tiefenachse T erstreckenden Ebene, also in x-z-Ebene.

In den Breitseiten 21 sind im Ausführungsbeispiel nach Fig. 1 jeweils zwei Führungsabschnitte 5 in Form von Führungsnuten 6 ausgebildet, die mit Führungsmitteln 55 in einem Akkuschacht 7 eines Gehäuses 41 zusammenwirken (Fig. 2). Die Führungsmittel 55, die sich in Richtung der Hochachse H erstrecken, sind im Ausführungsbeispiel als Führungsrippen 56 ausgebildet, die in die Führungsnuten 6 eingreifen, die sich in Richtung der Hochachse H erstrecken. Wie Fig. 2 zeigt, sind auf den gegenüberliegenden Breitseiten 8 und 9 des Akkuschachtes 7 jeweils zwei Führungsmittel 55 in Form von Führungsrippen 56 angeordnet, wobei die Führungsrippen 56 auf der einen Breitseite 8 zu den Führungsrippen 56 auf der anderen Breitseite 9 um einen Versatz v in Richtung der Breitenachse B versetzt liegen. Bevorzugt haben die Führungsmittel 55 auf der einen Breitseite 8 des Akkuschachtes 7 einen Abstand b voneinander, der größer ist als der Abstand a der Führungsrippen 56 auf der gegenüberliegenden Breitseite 9. Die Anordnung ist so getroffen, dass der Abstand a innerhalb des Abstandes b liegt.

In den langen Schmalseiten 31 des Akkupacks 1 sind weitere Führungsnuten 24 ausgebildet, die sich längs der Hochachse H erstrecken und der lagerichtigen Positionierung in einem nicht näher dargestellten Ladegerät dienen. Eine einzelne Führungsnut 24 erstreckt sich auf einer Schmalseite 31 vom Boden 26 bis in den Gehäusedeckel 25 des Akkupacks 1, wobei die Führungsnut 24 außermittig zu einer Seitenmittelachse 17 liegt.

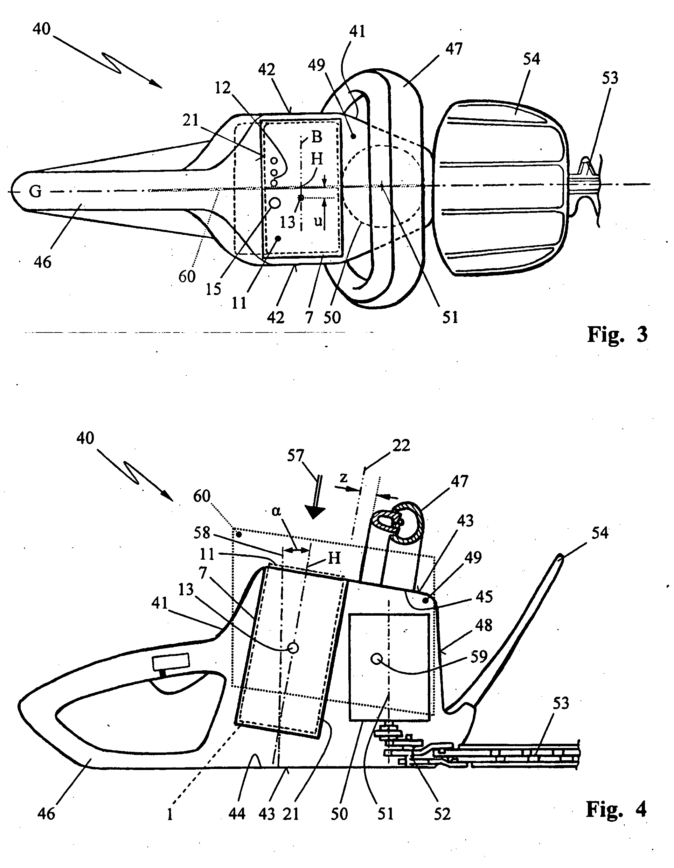

Wie im Ausführungsbeispiel nach Fig. 3 gezeigt, weist das Arbeitsgerät 40 ein Gehäuse 41 auf, welches Gehäuseseitenflächen 42 aufweist, die sich parallel zur Gehäuselängsachse G erstrecken und Gehäuselängsseiten bilden. Darüber hinaus hat das Gehäuse 41 eine obere sowie eine untere Gehäuseseitenfläche 43, wobei die untere Gehäuseseitenfläche 43 einen Gehäuseboden 44 bildet. Die obere Gehäuseseitenfläche 43 bildet eine Gehäuseoberseite 45.

Das Gehäuse 41 weist einen hinteren Handgriff 46 auf, der sich in Richtung der Gehäuselängsachse G erstreckt. Ferner ist ein vorderer Handgriff 47 vorgesehen, der das Gehäuse 41 übergreift und oberhalb eines Antriebsmotors 50 liegt, der innerhalb des Gehäuses 41 angeordnet ist. Der Akkuschacht 7 liegt somit zwischen dem hinteren Handgriff 46 und dem im Gehäuse angeordneten elektrischen Antriebsmotor 50. Die innere Aufteilung des Gehäuses 41 ist so vorgesehen, dass zwischen dem Akkuschacht 7 und der vorderen Gehäusestirnseite 48 ein innerer Gehäuseraum 49 liegt, der den Antriebsmotor 50, eine Ansteuerelektronik für den Antriebsmotor und ggf. einen Betriebsmitteltank aufnimmt. Die Lage des Akkuschachtes 7 ist derart vorgesehen, dass die dem Antriebsmotor 50 zugewandte Breitseite 21 einen Abstand z zum vorderen Handgriff 47 aufweist.

Im Ausführungsbeispiel nach den Figuren 3 und 4 ist eine Heckenschere gezeigt, deren Antriebsmotor stehend angeordnet ist. Die Drehachse 51 des Antriebsmotors steht aufrecht zum Gehäuseboden 44 und treibt ein Exzentergetriebe 52 zum Antrieb der Heckenscherenmesser eines Messerbalkens 53 an.

Zwischen der Gehäusestirnseite 48 des Arbeitsgerätes 40 und dem Messerbalken 53 ist ein Berührschutz 54 angeordnet.

Der quaderförmige Akkupack 1 wird - im Ausführungsbeispiel nach den Figuren 3 und 4 - von oben in Einschubrichtung 57 in Richtung auf den Gehäuseboden 44 in den Akkuschacht 7 abgesenkt. Dabei ist die Drehlage des Akkupacks 1 um die Hochachse H durch die Führungsabschnitte 5 am Akkupack 1 sowie die Führungsmittel 55 im Akkuschacht 7 vorgegeben. Wie Fig. 2 zeigt, liegt - in Draufsicht auf die obere Stirnseite 11 mit den Anzeigemitteln 12 und Betätigungsmitteln 15 gesehen - die Tiefenachse T parallel zur Gehäuselängsachse G; vorzugsweise liegt die Tiefenachse T in Draufsicht nach Fig. 2 deckungsgleich mit der Längsachse G. Der Akkupack 1 ist so in dem Akkuschacht 7 aufgenommen, dass sich seine Breitenachse B quer zur Gehäuselängsachse G erstreckt und seine Hochachse H auf dem Gehäuseboden 44 (Fig. 4) steht. Die Abmessungen sind dabei so vorgenommen, dass die Schmalseiten 31 des Akkupacks 1 etwa parallel und mit geringem Abstand k zur ersten Gehäuseseitenfläche 42 liegen, die im Ausführungsbeispiel nach den Figuren 3 und 4 die Gehäuselängsseiten sind. Der Abstand k liegt vorzugsweise im Bereich von 2 mm bis 15 mm, vorzugsweise an der Stelle mit größtem Abstand bei etwa 9 mm. Die Stirnseiten 11 des Akkupacks 1 liegen - wie Fig. 4 zeigt - benachbart zu weiteren Gehäuseseitenflächen 43, die im Ausführungsbeispiel durch den Gehäuseboden 44 und die Gehäuseoberseite 45 gebildet sind. Die ersten Gehäuseseiten 42 (Gehäuselängsseiten) und die zweiten Gehäuseseiten 43 (Gehäuseboden 44, Gehäuseoberseite 45) liegen etwa orthogonal zueinander. Die Breitseiten 21 des Akkupacks 1 liegen mit einem Abstand r von etwa 0,5 mm bis 4 mm, vorzugsweise mit einem maximalen Abstand r von 2,1 mm zur Innenwand des Akkuschachtes 7 (Fig. 2).

Gemäß dem Ausführungsbeispiel nach den Figuren 3 und 4 ist die Anordnung so getroffen, dass die Hochachse H in Draufsicht gemäß den Figuren 2 und 3 bzw. in Draufsicht auf die Stirnseite 11 mit den Anzeigemitteln 12 und Betätigungsmitteln 15 die Gehäuselängsachse G des Arbeitsgerätes 40 schneidet. Die Gehäuselängsachse G ist dabei bevorzugt die Längsmittelachse des Arbeitsgerätes 40.

Die Lage des Akkupacks 1, seine Einbauorientierung im Gehäuse 41 des Arbeitsgerätes 40 sowie der im Gehäuse 41 angeordnete Antriebsmotor 50 sind derart zueinander ausgerichtet, dass die Hochachse H des Akkupacks 1 und die Drehachse 51 des Antriebsmotors 50 eine gemeinsame Ebene 60 bilden; die gemeinsame Ebene 60 liegt vorzugsweise lotrecht auf dem Gehäuseboden 44 und bildet in etwa eine Symmetrieebene in Längsrichtung des Arbeitsgerätes 40.

In bevorzugter Ausführungsform liegt die Gehäuselängsachse G bevorzugt ebenfalls in der Ebene 60.

Die Einschublage des Akkupacks 1 in den Akkuschacht 7 ist so vorgesehen, dass die in Einschubrichtung 57 hintere Stirnseite 11 mit den Anzeigemitteln 12 und Betätigungsmitteln 15 den Akkuschacht 7 verschließt und eine Teilfläche der Gehäuseseitenfläche 43 bildet. Im gezeigten Ausführungsbeispiel bildet die Stirnseite 11 mit den Anzeige- und/oder Betätigungsmitteln 12, 15 eine Teilfläche der Gehäuseoberseite 45. Damit sind die in der die Gehäuseoberseite 45 bildenden Stirnseite 11 angeordneten Anzeigemittel 12 und Betätigungsmittel 15 für den Benutzer einfach erkennbar und leicht zugänglich.

Im Ausführungsbeispiel nach den Figuren 3 und 4 ist die Hochachse H des Akkupacks 1 gegenüber einer Lotrechten 58 auf den Gehäuseboden 44 geneigt angeordnet. Im Ausführungsbeispiel ist die Hochachse H des Akkupacks 1 in Richtung der Gehäuselängsachse G mit einem Winkel α nach vorne geneigt. Der Winkel α beträgt etwa 2° bis 20°, vorzugsweise etwa 15°. Die Neigung der Hochachse H in Richtung auf die vordere Gehäusestirnseite 48 ist so vorgesehen, dass eine Ebene 22 einen Abstand z zum vorderen Handgriff 47 aufweist, wobei die Ebene 22 bestimmt ist durch die dem Antriebsmotor 50 zugewandt liegende Breitseite 21 des Akkupacks 1.

Die Hochachse H des Akkupacks 1 ist durch den Schnittpunkt der Diagonalen D1 und D2 der Stirnseiten 11 in seiner Lage präzise bestimmt (Fig. 2).

Die konstruktive Lage des Akkupacks 1, die durch die Gestaltung und Form des Akkuschachtes 7 im Gehäuse 41 bestimmt ist, wird zweckmäßig so gewählt, dass der Schwerpunkt 13 des Akkupacks 1 mit geringem seitlichen Abstand u zu der durch die Hochachse H und die Gehäuselängsachse G aufgespannten Ebene 60 liegt. Der Abstand u beträgt etwa 0,02 mm bis 0,2 mm. Der Schwerpunkt 59 des Gehäuses 41 mit dem darin gelagerten Antriebsmotor 50, einer Ansteuerelektronik und vorzugsweise dem Betriebsmittelbehälter liegt bevorzugt in der durch die Gehäusehochachse H und die Gehäuselängsachse G aufgespannten Ebene 60; ein geringer Abstand von der Ebene kann zweckmäßig sein.

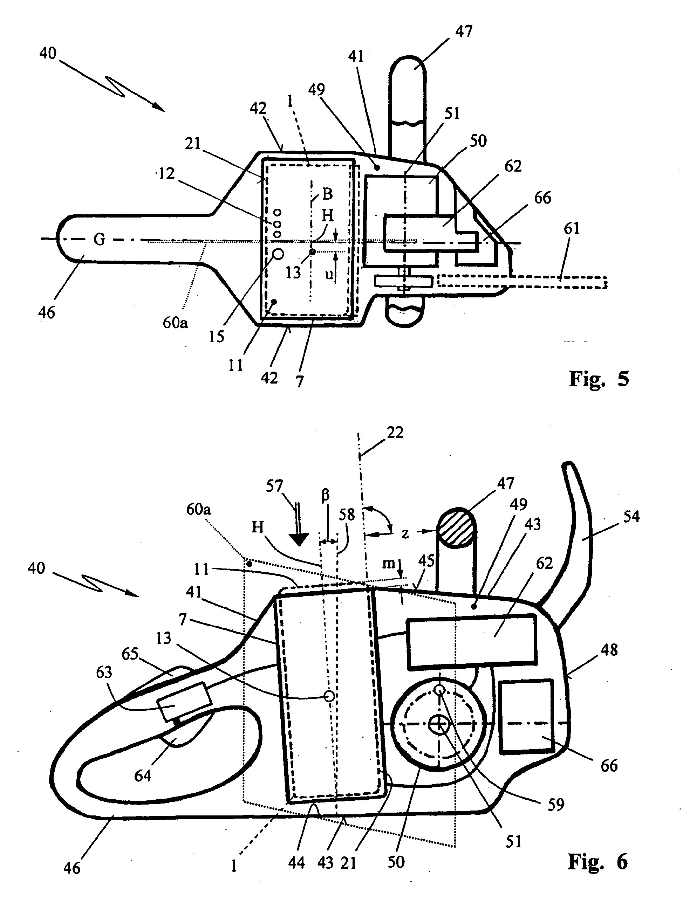

Im Ausführungsbeispiel nach den Figuren 5 und 6 ist als Arbeitsgerät 40 eine Motorkettensäge gezeigt. Der schematische Grundaufbau des Arbeitsgerätes 40 entspricht dem nach den Figuren 3 und 4, weshalb für gleiche Teile gleiche Bezugszeichen verwendet sind.

In Abweichung vom Ausführungsbeispiel einer Heckenschere nach den Figuren 3 und 4 ist der Antriebsmotor 50 liegend angeordnet, weshalb seine Drehachse 51 etwa lotrecht auf der Ebene 60a steht, die durch die Gehäuselängsachse G und die Hochachse H des Akkupacks 1 aufgespannt ist. Auch hier erfolgt das Einschieben des Akkupacks 1 in den Akkuschacht 7 in Einschubrichtung 57 von oben. Der Akkupack 1 ist so tief im Akkuschacht 7 aufgenommen, dass seine obere Stirnseite 11 mit den Anzeigemitteln 12 und Betätigungsmitteln 15 etwa die Gehäuseoberseite 45 bildet. Ein eventueller Überstand m ist so gewählt, dass die Harmonie der Gehäuseoberseite 45 nicht gestört ist.

Durch die gewählte Anordnung des Akkupacks 1 im Gehäuse 41 des Arbeitsgerätes, im Ausführungsbeispiel eine Heckenschere, wird eine vorteilhafte Gerätebalance um den vorderen Handgriff 47 erzielt.

Im Ausführungsbeispiel nach den Figuren 5 und 6 ist ein tragbares, handgeführtes Arbeitsgerät am Beispiel einer Motorkettensäge gezeigt. Der Akkupack 1 ist gegenüber der Lotrechten 58 auf den Gehäuseboden 44 um einen Winkel β nach hinten, also zum hinteren Handgriff 46 hin geneigt. Der Neigungswinkel beträgt bevorzugt 2° bis 20°, im gezeigten Ausführungsbeispiel 10°.

Die Anordnung des Akkupacks 1 mit seiner Breitenachse B quer zu der Gehäuselängsachse G des Arbeitsgerätes 40 führt zu einer günstigen kurzen Baulänge, so dass bei einer Motorsäge aufgrund des konstruktiv kurzen Hebelarms die vom Benutzer aufgebrachte Vorschubkraft nicht zu groß werden kann. Dadurch ist insgesamt die Blockierneigung reduziert.

In dem Gehäuseraum 49 zwischen dem Akkuschacht 7 und der vorderen Gehäusestirnseite 48 ist neben dem Elektromotor 50 und dem Antrieb für die Schneidgarnitur 61 eine Steuerelektronik 62 angeordnet, die mit dem Akkupack 1, dem Antriebsmotor 50 sowie einem Betätigungsschalter 63 in Verbindung steht. Der Betätigungsschalter 63 wird über einen im hinteren Handgriff 46 gelagerten Gashebel 64 betätigt, der nach Niederdrücken einer Gashebelsperre 65 bedient werden kann. Neben der Steuerelektronik 62 ist im Gehäuseraum 49 auch ein Betriebsmittelbehälter 66 vorgesehen, der z. B. das Kettenöl zur Schmierung der auf einer Führungsschiene umlaufenden Sägekette enthält.

Der Schwerpunkt 13 des Akkupacks 1 liegt mit geringem seitlichen Abstand u zu der durch die Hochachse H und die Gehäuselängsachse G aufgespannten Ebene 60. Der Abstand u beträgt etwa 0,02 mm bis 0,2 mm. Der Schwerpunkt 59 des Gerätegehäuses 41 mit den darin angeordneten Einbauten ist wiederum so gewählt, dass er vorteilhaft in der Ebene 60a liegt, die durch die Hochachse H des Akkupacks 1 und die Gehäuselängsachse G aufgespannt ist; ein geringer Abstand von der Ebene kann zweckmäßig sein.

Im Ausführungsbeispiel nach den Figuren 5 und 6 ist die Gehäuselängsachse G im Wesentlichen eine Gehäuselängsmittelachse.

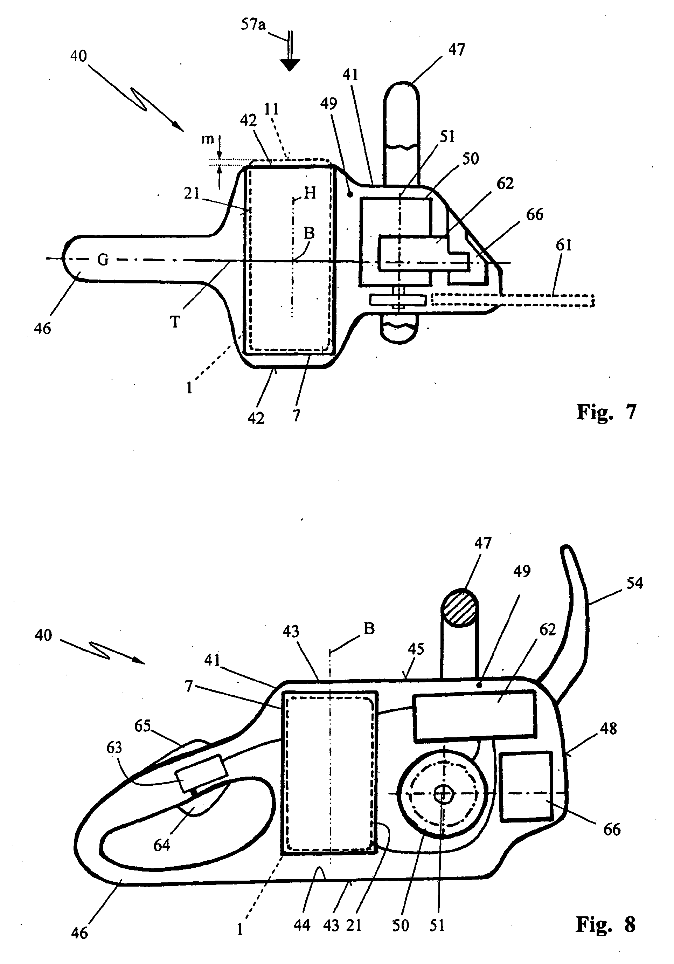

Das Ausführungsbeispiel nach den Figuren 7 und 8 entspricht im Wesentlichen dem nach den Figuren 5 und 6, weshalb für gleiche Teile gleiche Bezugszeichen verwendet sind.

In Abweichung von dem Ausführungsbeispiel nach den Figuren 5 und 6 ist im Ausführungsbeispiel nach den Figuren 7 und 8 der Akkupack 1 seitlich in das Gehäuse 41 des Arbeitsgerätes 40 einzuschieben, welches im Ausführungsbeispiel als Motorkettensäge dargestellt ist. Wie Fig. 7 zeigt, wird der Akkupack 1 von einer Gehäuselängsseite 67 des Gehäuses 41 eingeschoben, wobei die Gehäuselängsseite 67 sich im Wesentlichen parallel zu der Gehäuselängsachse G erstreckt. Bei dieser Anordnung liegt die Hochachse H etwa parallel zum Gehäuseboden 44, wobei die Breitenachse B etwa lotrecht auf dem Gehäuseboden 44 steht. Die Tiefenachse T liegt - in Draufsicht nach Fig. 7- wiederum parallel zur Gehäuselängsachse G, vorzugsweise deckungsgleich zur Gehäuselängsachse G.

Der Akkupack 1 ist so tief im Akkuschacht 7 aufgenommen, dass seine Stirnseite 11 mit den Anzeigemitteln und Betätigungsmitteln etwa die Gehäuseseitenfläche 42 bildet. Ein eventueller Überstand m ist so gewählt, dass die Harmonie der Gehäuseseitenfläche 42 nicht gestört ist.

Es kann vorteilhaft sein, in dem Gehäuse eines Arbeitsgerätes den Akkupack derart anzuordnen, dass seine Breitenachse längs der Gehäuselängsachse des Arbeitsgerätes ausgerichtet liegt, z. B. parallel oder achsengleich mit der Gehäuselängsachse. Dadurch wird eine besonders schmale Bauform erzielt, die für Arbeiten in engen Bereichen vorteilhaft sein kann, z. B. beim Entasten von Bäumen.

## Patentansprüche

1. Elektroarbeitsgerät, insbesondere tragbares, handgeführtes Arbeitsgerät wie eine Heckenschere, eine Motorsäge, ein Trennschleifer oder dgl., mit einem **Geräte**gehäuse (41), das einen sich in Richtung einer **Gerätegehäuse**längsachse¹ (G) erstreckenden hinteren Handgriff (46) aufweist, sowie mit einem **Gerätegehäuse**boden (44) und **ersten und zweiten Gerätegehäuse**seiten**flächen² (42, 43)** ausgebildet ist, wobei in dem **Geräte**gehäuse (41) ein elektrischer Antriebsmotor (50) sowie eine Steuerelektronik (63) zur Inbetriebnahme des Antriebsmotors (50) aufgenommen ist, mit einem im Gerätegehäuse (41) ausgebildeten Akkuschacht (7) zur Aufnahme eines Akkupacks (1), **wobei der Akkuschacht (7) zwischen dem hinteren Handgriff (46) und dem Antriebsmotor (50) angeordnet ist³,** wobei der Akkupack (1) **ein Akkupackgehäuse⁴ (2) mit** etwa quaderförmiger Gestalt hat und sein **Akkupack**gehäuse (2) sich in allen drei orthogonalen Raumrichtungen (x, y, z) in Richtung einer Hochachse (H), einer Breitenachse (B) und einer Tiefenachse (T) erstreckt, **wobei der Akkupack (1) eine Höhe (10), eine Breite (20) sowie eine Tiefe (30) aufweist, wobei seine Höhe (10) größer als seine Breite (20) ist⁵,**
**wobei** der Akkupack (1) derart in dem Akkuschacht (7) aufgenommen ist, dass sich seine Breitenachse (B) quer zu der **Gerätegehäuse**längsachse (G) des Arbeitsgerätes (40) erstreckt, **und wobei die Hochachse (H) auf dem Gerätegehäuseboden (44) steht und die Stirnseiten (11) des Akkupacks (1) benachbart zu den zweiten Gerätegehäuseseitenflächen (43) liegen⁶,**
**dadurch gekennzeichnet, dass die Breite (20) des Akkupacks (1) größer als seine Tiefe (30) ist⁷**, und dass die Schmalseiten (31) des Akkupacks (1) etwa parallel und mit geringem Abstand (k) zu einer ersten **Gerätegehäuse**seitenfläche (42) des Arbeitsgerätes (40) liegen.

2. Elektroarbeitsgerät nach Anspruch 1,
**dadurch gekennzeichnet, dass** die Schmalseiten (31) des Akkupacks (1) unmittelbar benachbart zu den **Gerätege**häuselängsseiten (67) des **Gerätegehäuses** (41) liegen.

3. Elektroarbeitsgerät nach Anspruch 1,
**dadurch gekennzeichnet, dass** die Stirnseiten (11) des Akkupacks (1) benachbart zum Gerätegehäuseboden (44) und der Gerätegehäuseoberseite (45) liegen.

4. Elektroarbeitsgerät nach Anspruch **41,**
**dadurch gekennzeichnet, dass** die Höhe (10) des Akkupacks (1) etwa seiner 1,2fachen bis 2,5fachen Breite (20) entspricht, vorzugsweise etwa seiner 1,4fachen Breite (20) entspricht.

5. Elektroarbeitsgerät nach Anspruch **41,**
**dadurch gekennzeichnet, dass** die Breite (20) des Akkupacks (1) etwa seiner 1,2fachen bis 2,5fachen Tiefe (30) entspricht, vorzugsweise etwa seiner 1,7 fachen Tiefe (30) entspricht.

6. Elektroarbeitsgerät nach einem der Ansprüche 1 bis **5,**
**dadurch gekennzeichnet, dass** die Hochachse (H) des Akkupacks (1) die Gerätegehäuselängsachse (G) des Arbeitsgerätes (40) schneidet.

7. Elektroarbeitsgerät nach einem der Ansprüche 1 bis **6,**
**dadurch gekennzeichnet, dass** die Hochachse (H) des Akkupacks (1) und die Drehachse (51) des Antriebsmotors (50) eine gemeinsame Ebene (60) bilden, in der vorzugsweise auch die **Gerätegehäuse**längsachse (G) liegt.

8. Elektroarbeitsgerät nach einem der Ansprüche 1 bis **7**,
**dadurch gekennzeichnet, dass** der Schwerpunkt (13) des Akkupacks (1) mit geringem seitlichen Abstand (u) zu der durch die Hochachse (H) und die **Gerätegehäuse**längsachse (G) aufgespannten Ebene (60) liegt.

9. Elektroarbeitsgerät nach einem der Ansprüche 1 bis **8**,
**dadurch gekennzeichnet, dass** die eine Seitenfläche des Akkupacks (1), vorzugsweise eine Stirnseite (11), eine Teilfläche der **Gerätegehäuse**seitenfläche (42, 43) des **Gerätegehäuses** (41) bildet.

10. Elektroarbeitsgerät nach Anspruch **9,**
**dadurch gekennzeichnet, dass** die Teilfläche Teil der Gerätegehäuseoberseite (45) ist.

11. Elektroarbeitsgerät nach einem der Ansprüche 1 bis **9,**
**dadurch gekennzeichnet, dass** die Hochachse (H) des Akkupacks (1) zu einer Lotrechten (58) auf den Gerätegehäuseboden (44) geneigt ist.

12. Elektroarbeitsgerät nach Anspruch **11,**
**dadurch gekennzeichnet, dass** die Hochachse (H) des Akkupacks (1) in Richtung der Gerätegehäuselängsachse (G) mit einem Winkel (α, β) nach vorne oder hinten geneigt liegt.

13. Elektroarbeitsgerät nach einem der Ansprüche 1 bis **12**,
**dadurch gekennzeichnet, dass** in dem zwischen dem Akkuschacht (7) und der vorderen **Gerätegehäuse**stimseite (48) liegenden **Gerätegehäuse**raum (49) der Antriebsmotor (50), die Steuerelektronik (62) und vorzugsweise ein Betriebsmittelbehälter (66) angeordnet sind.

14. Elektroarbeitsgerät nach einem der Ansprüche 1 bis 13,
**dadurch gekennzeichnet, dass** die dem hinteren Handgriff (46) abgewandte Breitseite (21) des Akkupacks (1) eine Ebene (22) bestimmt, die mit Abstand (z) zu einem vorderen Handgriff (47) liegt.

15. Elektroarbeitsgerät nach Anspruch **14,**
**dadurch gekennzeichnet, dass** der vordere Handgriff (47) das **G**erätegehäuse (41) etwa in Höhe des Antriebsmotors (50) übergreift.

## Claims

1. Electric working implement, in particular portable, hand-manipulated working implement, such as a hedge cutter, a power saw, an angle grinder or the like, comprising an implement housing (41) which has a rear handle (46) extending in the direction of an implement housing longitudinal axis (G) and which is provided with a housing base (44) and first and second housing side surfaces (42, 43), wherein an electric drive motor (50) and control electronics (63) for the activation of the drive motor (50) are accommodated in the implement housing (41), further comprising a battery shaft (7) formed in the implement housing (41) to accommodate a battery pack (1), wherein the battery shaft (7) is located between the rear handle (46) and the drive motor (50), wherein the battery pack (1) has a battery pack housing (2) of an approximately rectangular shape and its battery pack housing (2) extends in all three orthogonal directions in space (x, y, z) in the direction of a height axis (H), a width axis (B) and a depth axis (T), wherein the battery pack (1) has a height (10), a width (20) and a depth (30), its height (10) being more than its width (20), wherein the battery pack (1) is accommodated in the battery shaft (7) in such a way that its width axis (B) extends at right angles to the implement housing longitudinal axis (G) of the working implement (40), and wherein the height axis (H) stands on the implement housing base (44) and the end faces (11) of the battery pack (1) are adjacent to the second implement housing side surfaces (43),
**characterised in that** the width (20) of the battery pack (1) is more than its depth (30) and **in that** the narrow sides (31) of the battery pack (1) extend approximately parallel to and at a small distance (k) from a first implement housing side surface (42) of the working implement (40).

2. Electric working implement according to claim 1,
**characterised in that** the narrow sides (31) of the battery pack (1) are immediately adjacent to the implement housing longitudinal sides (67) of the implement housing (41).

3. Electric working implement according to claim 1,
**characterised in that** the end faces (11) of the battery pack (11 are adjacent to the implement housing base (44) and the implement housing top (45).

4. Electric working implement according to claim 1,
**characterised in that** the height (10) of the battery pack (1) is approximately 1.2 to 2.5 times its width (20), being preferably approximately 1.4 times its width (20).

5. Electric working implement according to claim 1,
**characterised in that** the width (20) of the battery pack (1) is approximately 1.2 to 2.5 times its depth (30), being preferably approximately 1.7 times its depth (30).

6. Electric working implement according to any of claims 1 to 5,
**characterised in that** the height axis (H) of the battery pack (1) intersects the implement housing longitudinal axis (G) of the working implement (40).

7. Electric working implement according to any of claims 1 to 6,
**characterised in that** the height axis (H) of the battery pack (1) and the axis of rotation (51) of the drive motor (50) form a common plane (60) in which the implement housing longitudinal axis (G) preferably lies as well.

8. Electric working implement according to any of claims 1 to 7,
**characterised in that** the centre of gravity (13) of the battery pack (1) is located at a small lateral distance (u) from the plane (60) defined by the height axis (H) and the implement housing longitudinal axis (G).

9. Electric working implement according to any of claims 1 to 8,
**characterised in that** one of the side surfaces of the battery pack (1), preferably an end face (11), forms a part-surface of the implement housing side surface (42, 43) of the implement housing (41).

10. Electric working implement according to claim 9,
**characterised in that** the sub-surface is a part of the implement housing top (45).

11. Electric working implement according to any of claims 1 to 9,
**characterised in that** the height axis (H) of the battery pack (1) is inclined with respect to a surface normal (58) on the implement housing base (44).

12. Electric working implement according to claim 11,
**characterised in that** the height axis (H) of the battery pack (1) is inclined towards the front or the rear at an angle (α, β) in the direction of the implement housing longitudinal axis (G).

13. Electric working implement according to any of claims 1 to 12,
**characterised in that** the drive motor (50), the control electronics (62) and preferably an operating fluid container (66) are located in the implement housing chamber (49) between the battery shaft (7) and the implement housing front face (48).

14. Electric working implement according to any of claims 1 to 13,
**characterised in that** the broadside (21) of the battery pack (1), which is remote from the rear handle (46), determines a plane (22) having a distance (z) from a front handle (47).

15. Electric working implement according to claim 14,
**characterised in that** the front handle (47) overlaps the implement housing (41) approximately at the level of the drive motor (50).

## Revendications

1. Appareil de travail électrique, en particulier appareil portatif tenu à la main tel qu'un taille-haie, une tronçonneuse, une meuleuse ou un appareil similaire, avec un boîtier d'appareil (41) qui comporte une poignée arrière (46) s'étendant dans le sens d'un axe longitudinal de boîtier d'appareil (G) et qui est pourvu d'un fond de boîtier d'appareil (44) et des premières et secondes surfaces latérales de boîtier d'appareil (42, 43), étant précisé qu'un moteur d'entraînement électrique (50) et une électronique de commande (63) pour la mise en marche du moteur d'entraînement (50) sont logés dans le boîtier d'appareil (41), avec un compartiment pour batterie (7) qui est formé dans le boîtier d'appareil (41) pour recevoir une batterie (1), étant précisé que le compartiment pour batterie (7) est disposé entre la poignée arrière (46) et le moteur d'entraînement (50), que la batterie (1) a un boîtier de batterie (2) de forme à peu près parallélipipédique et que son boîtier (2) s'étend dans les trois directions spatiales orthogonales (x, y, z), dans le sens d'un axe vertical (H), d'un axe de largeur (B) et d'un axe de profondeur (T), que la batterie (1) présente une hauteur (10), une largeur (20) et une profondeur (30), que sa hauteur (10) est plus grande que sa largeur (20), que la batterie (1) est logée dans le compartiment pour batterie (7) de telle sorte que son axe de largeur (B) s'étende transversalement par rapport à l'axe longitudinal de boîtier (G) de l'appareil (30), et que l'axe vertical (H) se dresse sur le fond de boîtier d'appareil (44) et que les côtés frontaux (11) de la batterie (1) sont voisins des secondes surfaces latérales de boîtier d'appareil (43), **caractérisé en ce que** la largeur (20) de la batterie (1) est plus grande que sa profondeur (30), et **en ce que** les petits côtés (31) de la batterie (1) sont à peu près parallèles à une première surface latérale de boîtier (42) de l'appareil (40) et sont situés à une faible distance (k) de ladite première surface latérale (42).

2. Appareil de travail électrique selon la revendication 1,
**caractérisé en ce que** les petits côtés (31) de la batterie (1) sont directement voisins des grands côtés (67) du boîtier d'appareil (41).

3. Appareil de travail électrique selon la revendication 1,
**caractérisé en ce que** les côtés frontaux (11) de la batterie (1) sont voisins du fond de boîtier d'appareil (44) et du côté supérieur de boîtier d'appareil (45).

4. Appareil de travail électrique selon la revendication 1,
**caractérisé en ce que** la hauteur (10) de la batterie (1) correspond à peu près à 1,2 à 2,5 fois sa largeur (20), de préférence à peu près à 1,4 fois sa largeur (20).

5. Appareil de travail électrique selon la revendication 1,
**caractérisé en ce que** la largeur (20) de la batterie (1) correspond à peu près à 1,2 à 2,5 fois sa profondeur (30), de préférence à peu près à 1,7 fois sa profondeur (30).

6. Appareil de travail électrique selon l'une des revendications 1 à 5,
**caractérisé en ce que** l'axe vertical (H) de la batterie (1) coupe l'axe longitudinal de boîtier (G) de l'appareil (40).

7. Appareil de travail électrique selon l'une des revendications 1 à 6,
**caractérisé en ce que** l'axe vertical (H) de la batterie (1) et l'axe de rotation (51) du moteur d'entraînement (50) forment un plan commun (60) dans lequel se trouve aussi, de préférence, l'axe longitudinal de boîtier d'appareil (G).

8. Appareil de travail électrique selon l'une des revendications 1 à 7,
**caractérisé en ce que** le centre de gravité (13) de la batterie (1) est situé à une faible distance latérale (u) du plan (60) couvert par l'axe vertical (H) et l'axe longitudinal de boîtier d'appareil (G).

9. Appareil de travail électrique selon l'une des revendications 1 à 8,
**caractérisé en ce qu'**une surface latérale de la batterie (1), de préférence un côté frontal (11), forme une surface partielle de la surface latérale (42, 43) du boîtier d'appareil (41).

10. Appareil de travail électrique selon la revendication 9,
**caractérisé en ce que** la surface partielle fait partie du côté supérieur de boîtier d'appareil (45).

11. Appareil de travail électrique selon l'une des revendications 1 à 9,
**caractérisé en ce que** l'axe vertical (H) de la batterie (1) est incliné par rapport à une perpendiculaire (58) au fond de boîtier d'appareil (44).

12. Appareil de travail électrique selon la revendication 11,
**caractérisé en ce que** l'axe vertical (H) de la batterie (1) est incliné vers l'avant ou vers l'arrière suivant un angle (α, β) dans le sens de l'axe longitudinal de boîtier d'appareil (G).

13. Appareil de travail électrique selon l'une des revendications 1 à 12,
**caractérisé en ce que** dans l'espace de boîtier d'appareil (49) situé entre le compartiment pour batterie (7) et le côté frontal avant de boîtier d'appareil (48) sont disposés le moteur d'entraînement (50), l'électronique de commande (62) et de préférence un récipient pour fluide moteur (66).

14. Appareil de travail électrique selon l'une des revendications 1 à 13,
**caractérisé en ce que** le côté de la largeur (21) de la batterie (1) qui est opposé à la poignée arrière (46) définit un plan (22) qui est situé à une distance (z) d'une poignée avant (47).

15. Appareil de travail électrique selon la revendication 14,
**caractérisé en ce que** la poignée avant (47) dépasse du boîtier d'appareil (41) à peu près dans le sens de la hauteur du moteur d'entraînement (50).
